# EUROPEAN PATENT APPLICATION

(11) **EP 4 811 349 A1**
(43) Date of publication of application: **23.09.2026**
(21) Application number: 26155421.6
(22) Date of filing: 30.01.2026
(51) Int. Cl.: G09G 5/02, G09G 3/00

(54) **DEVICE FOR AND METHOD OF AUTOMATICALLY ADJUSTING WHITE BALANCE**

(30) Priority: 18.03.2025 WO PCT/KR2025/099835
(71) Applicant: LG Electronics Inc., Yeongdeungpo-gu Seoul 07336 (KR)
(72) Inventor: YOON, Junyoung, 07796 Seoul (KR); CHAE, Myoungsuk, 07796 Seoul (KR); KIM, Jaehyun, 07796 Seoul (KR)
(74) Representative: Schott, Jakob Valentin

(57) **Abstract**

Proposed is a device for automatically adjusting white balance, the device including a camera included on one side of the main body of the device; a communication unit communicatively connected to a first display; and a processor that activates the camera for color extraction from the first display. In the device, in response to the main body of the device being attached to one region of the first display, the processor extracts a color value of the first display, the color value being recognized using the camera, and stores the extracted color value in such a manner as to be applicable to a second display different from the first display.

## Description

### BACKGROUND

### 1. Field

The present disclosure relates to a device for and a method of automatically adjusting white balance and, more particularly, to a device and a method that are configured to automatically adjust white balance between different displays using a camera.

### 2. Background

In the related art, in order to perform uniform color calibration for a plurality of displays, the displays are required to be placed in a holder and positioned within a camera's field of view.

In this manner, the installation space is restricted because a reference display and a target display on which color calibration is to be performed are simultaneously positioned within the camera's field of view.

In addition, white balance adjustment may also be affected by the ambient lighting in the space where the reference display and the target display are installed. Moreover, for users who are not familiar with the concept of white balance adjustment, setting a desired color gamut may be cumbersome and difficult.

Furthermore, a sensor necessary for color detection and calibration is required to be connected to a PC through a wired connection. Thus, inconvenience and spatial constraints due to the wired connection may arise, thereby causing time loss in communication.

Specifically, in Korean Patent Application Publication No. 10-2014-0126606 (hereinafter referred to as 'Patent Document 1'), color calibration is performed by a display, a camera by interconnecting a display, a camera, and a PC using a cable and a network connection. In addition, in Patent Document 1, an additional process for matching a display region within the camera's field of view is required. Furthermore, time loss occurs due to the communication between the camera and the PC.

In addition, U.S. Patent Application Publication No. 20190362688 (hereinafter referred to as 'Patent Document 2') discloses a method of adjusting color temperature through control. In Patent Document 2, manual adjustment of the control imposes a limitation on the accuracy of matching the color temperature of the display, and the current luminance of the display is determined in response to ambient light. Furthermore, a first color parameter and a second color parameter are integrated to obtain a third color parameter, and the acquired third color parameter is set to a target color parameter, thereby limiting the accuracy of color matching.

### SUMMARY

Objects of the present disclosure are to address the above-mentioned and related problems.

An object of some embodiments of the present disclosure is to provide a device for and a method of automatically adjusting white balance that are capable of performing automatic color calibration between a plurality of displays without the simultaneous positioning of a reference display and a target display within a camera's field of view and without incurring time loss caused by cable and PC connections.

Another object of some embodiments of the present disclosure is to provide a device for and a method of automatically adjusting white balance that are capable of enabling a user unfamiliar with the concept of white balance adjustment to accurately match the color temperature of a display.

Still another object of some embodiments of the present disclosure is to provide a device for and a method of automatically adjusting white balance that are capable of performing color temperature matching between a plurality of displays in an intuitive, user-friendly manner while achieving accurate matching.

To this end, a device for automatically adjusting white balance, according to an embodiment of the present disclosure, is capable of being attached to a display of which a color value is to be extracted and extracting the color value, and storing the extracted color value in such a manner as to be immediately applicable to another display.

According to one aspect of the present disclosure, there is provided a device for automatically adjusting white balance, the device including: a camera included on one side of the main body of the device; a communication unit communicatively connected to a first display; and a processor that activates the camera for color extraction from the first display. In the device, in response to the main body of the device being attached to one region of the first display, the processor may extract a color value of the first display, the color value being recognized using the camera, and may store the extracted color value in such a manner as to be applicable to a second display different from the first display.

In an embodiment, the device may further include a touch screen that displays a first screen for the color extraction from the first display. Before or after the main body of the device is attached to the one region of the first display, in response to a touch input to the first screen, the processor may operate to extract the color value of the first display.

In an embodiment, in the device, in response to the color value of the first display being extracted, information about the extracted color value may be displayed on the first screen.

In an embodiment, in the device, the information about the extracted color value may be displayed on the first screen even after the main body of the device is detached from the first display, and the processor may operate to apply the extracted color value to the second display while the information about the extracted color value is displayed.

In an embodiment, the device may further include a memory in which information about the extracted color value is stored, wherein the processor may store the information about the extracted color value in a manner matched with identification information of the first display.

In an embodiment, the device may further include a sensor that, after the camera module is activated, may detect that the main body of the device is in contact with the surface of one region of the first display, wherein, based on the detection, the processor may perform an operation of extracting the color value of the first display.

In an embodiment, in the device, in response to the main body of the device approaching within a reference distance of the second display, the processor may control the communication unit to communicate with the second display, and, in response to the main body of the device being attached to one region of the second display, the processor may change white balance of the second display to match the extracted color value.

According to a second aspect of the present disclosure, there is provided a terminal device for adjusting white balance, the device including: a camera included on one side of the main body of the terminal device; a memory in which a color value of a first display is stored; a communication unit communicatively connected to a second display; and a processor that activates the camera module to perform color calibration on the second display. In the terminal device, in response to the main body of the terminal device being attached to one region of the second display, the processor calibrates a color value of the second display, the color value being recognized using the camera, to match the color value stored in the memory.

In an embodiment, the terminal device may further include a touch screen that displays a second screen which includes the color value of the first display, wherein, after the main body of the terminal device is attached to one region of the second display, in response to a touch input to the second screen, the processor may operate to apply the color value included in the second screen to the second display.

In an embodiment, in the terminal device, the processor may store a color value of the second display in the memory, the color value being recognized using the camera, and may display, on the second screen, a first object corresponding to the recognized color value of the second display.

In an embodiment, in the terminal device, in response to a selection input to the first object, the processor may restore the calibrated color value of the second display to the previous state thereof.

In an embodiment, in the terminal device, the second screen may include a second object corresponding to the stored color value of the first display, and, after the color value of the second display is restored to the previous state thereof, in response to a selection input to the second object, the processor may switch the color value of the second display to the color value of the first display, which corresponds to the second object.

In an embodiment, in the terminal device, a color value of a third display different from the first display may be stored in the memory, and the processor may display a list, including the color value of the first display and the color value of the third display, on the second screen of the touch screen.

In an embodiment, in the terminal device, the processor may calibrate the color of the second display to match either the color value of the first display or the color value of the third display, based on a selection input to the list.

According to still another aspect of the present disclosure, there is provided a method of automatically adjusting white balance, which is performed in an electronic device, the method including: requesting, by the electronic device, a connection for communication with a first display in response to execution of a predetermined application; requesting activation of a camera module of the electronic device for color extraction from the first display; extracting a color value of the first display, the color value being recognized using the camera module, in response to the electronic device being attached to one region of the first display; and storing the extracted color value in such a manner as to be applicable to a second display different from the first display.

According to still another aspect of the present disclosure, there is provided a method of automatically adjusting white balance, which is performed in an electronic device, the method including: storing a color value of a first display; requesting, by the electronic device, a connection for communication with a second display different from the first display; requesting activation of a camera module of the electronic device to perform color calibration on the second display; and calibrating a color value of the second display, the color value being recognized using the camera module, to match the stored color value, in response to the electronic device being attached to one region of the second display.

According to still another aspect of the present disclosure, there is provided a computer-readable medium on which a program for performing the method of automatically adjusting white balance on a computer is recorded.

In the device for and the method of automatically adjusting white balance, according to the embodiments of the present disclosure, the color gamuts of a plurality of displays can be matched using the movable device equipped with the camera, without directly inputting the color value and regardless of respective installation locations.

In addition, in the device for and the method of automatically adjusting white balance, according to the embodiments of the present disclosure, the device equipped with the camera can be selectively attached directly to either the display of which the color gamut is to be extracted or the display of which the color gamut is to be calibrated. By means of these simple and intuitive operations, the white balance can be matched. Thus, even users unfamiliar with color gamut calibration can use the device equipped with the camera, thereby enhancing usability.

In addition, in the device for and the method of automatically adjusting white balance, according to embodiments of the present disclosure, the calibrated color value can be restored to the original state thereof, and/or the calibrated color gamut can be reapplied through only a simple input, thereby enhancing user functionality.

### BRIEF DESCRIPTION OF THE DRAWINGS

The above and other aspects, features, and additional advantages of the present disclosure will be more clearly understood from the following detailed description, which is taken in conjunction with the accompanying drawings, in which:
FIG. 1 is a view illustrating an example of automatic white balance adjustment between different displays using a cameraattached terminal device, according to an embodiment of the present disclosure;
FIG. 2 is a view illustrating an exemplary detailed configuration of a terminal device for automatically adjusting white balance between displays using a camera, according to an embodiment of the present disclosure;
FIG. 3 is a flowchart illustrating steps of performing color extraction on a reference display using the terminal device, according to an embodiment of the present disclosure;
FIGS 4 to 6 are conceptual diagrams that are referenced to describe a sequence of operations performed by the terminal device to perform the color extraction from the reference display, the sequence being illustrated in the flowchart in FIG. 3;
FIG. 7 is a flowchart that is referenced to describe steps of applying an extracted color value to a target display using the terminal device, according to an embodiment of the present disclosure;
FIGS. 8 to 10 are conceptual diagrams illustrating a sequence of operations performed by the terminal device to automatically adjust the white balance of the target display illustrated in the flowchart in FIG. 7; and
FIGS. 11 and 12 are conceptual diagrams that are referenced to describe a method of restoring the white balance of the target display to the previous state thereof, according to an embodiment of the present disclosure, according to an embodiment of the present disclosure.

### DETAILED DESCRIPTION

Embodiments disclosed in the present specification will be described in detail below with reference to the accompanying drawings, and regardless of figure numbers, the same or similar constituent elements are assigned identical reference numerals and repeated descriptions thereof are omitted. The terms 'module' and 'unit' are hereinafter used interchangeably to name constituent elements solely for convenience of description in the present specification. These terms are not intended to have different meanings or to indicate different functions. In addition, in describing the embodiments disclosed in the present specification, detailed descriptions of well-known related technologies may be omitted when such descriptions are deemed to obscure the nature and gist of the present disclosure. In addition, the accompanying drawings are provided solely to facilitate understanding of the embodiments disclosed in the present specification. The technical idea disclosed in the present specification should not be construed as limited to the accompanying drawings. Furthermore, any alteration or equivalent of, or any substitute for, a constituent element according to an embodiment of the present disclosure, to the extent that it falls within the scope of the technical idea of the present disclosure, is intended to be encompassed within the scope of the present disclosure.

The ordinal terms 'first,' 'second,' and so on are used to describe various constituent elements and are not intended to imply any limitation on meaning or function. These terms are used merely to distinguish among constituent elements having similar functions.

It should be understood that, when a constituent element is described as being 'connected to' or 'having access to' another constituent element, such connection or access may be direct or may occur through one or more intermediary constituent elements. Likewise, it should be understood that, when a constituent element is described as being 'connected to' or 'having access to' another constituent element, such connection or access may be direct without the need for one or more intermediary constituent elements.

Unless expressly stated otherwise or required by context, a noun used in the singular form includes the plural form.

The terms 'include,' 'have,' or equivalents thereof, as used in the present disclosure, are intended to indicate the presence of described stated features, numbers, steps, operations, constituent elements, components, or combinations thereof, without precluding the presence or addition of one or more other features, numbers, steps, operations, constituent elements, components, or combinations thereof.

In the present specification, the terms "device for automatically adjusting white balance" and "terminal device" are used hereinafter interchangeably to refer to the same device with mobility.

In addition, the "device for automatically adjusting white balance" or "terminal device" may be wirelessly connected to one or more displays without using a cable or the like, thereby extracting a color value from one of the displays and then applying the extracted color value to another display.

In addition, in the present specification, the term "device for automatically adjusting white balance" or "terminal device" may include a camera module for recognizing and/or extracting a color value of a display.

In addition, in the present specification, the term "device for automatically adjusting white balance" or "terminal device" may refer to an electronic device for performing a method of automatically adjusting white balance, according to an embodiment of the present disclosure, the method being for accurately matching A color value among a plurality of displays.

In addition, the methods of automatically adjusting white balance, as described below, may be implemented in the forms of a computer-readable recording medium on which a program executable by a computer is recorded.

A method of automatically adjusting white balance, according to an embodiment of the present disclosure, may activate a camera of a terminal device that is connected to a display over a wireless network for color value extraction and then automatically extracts the color value in response to the attachment of the terminal device to the display.

In addition, the method for automatically adjusting white balance, according to the embodiment of the present disclosure, may activate the camera of the terminal device for color value calibration or matching and then apply a color value stored in the terminal device to a corresponding display in response to the attachment of the terminal device to another display that is connected over a wireless network.

At this point, the attachment or contact of the terminal device to and with a corresponding display or another display refers to the main-body frame of the terminal device being brought into full contact with a surface of the display, or being positioned in such close proximity to the surface that the main-body frame appears to be physically attached. However, in some embodiments, the attachment or contact of the terminal device may also refer to at least one portion of the main-body frame of the terminal device being spaced a small distance away from the surface of the display.

In addition, the attachment of the terminal device to a corresponding display and/or another display may be defined as a state in which the terminal device remains attached for a predetermined period of time, or in which a subsequent input is applied following the attachment.

The method of automatically adjusting white balance, according to the embodiment of the present disclosure, is described below with reference to the drawings.

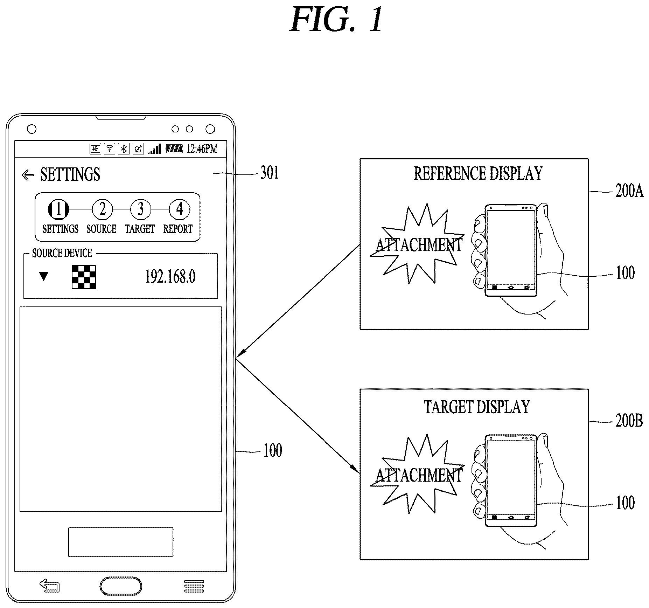

FIG. 1 is a view illustrating an example of automatic white balance adjustment between different displays using a cameraattached terminal device, according to an embodiment of the present disclosure.

With reference to FIG. 1, a terminal device 100 includes a camera positioned on the rear side thereof, opposite to a screen 301 of a display.

The terminal device 100 may be communicatively connected in a wireless manner to a reference display, namely, a first display 200A, of which a color value is to be extracted, and may activate the camera arranged on the rear surface of the terminal device 100. Subsequently, in response to the rear side of the terminal device 100 being attached to a surface of the first display 200A, the terminal device 100 may recognize and extract a color value of a first display 200A using the activated camera. That is, only the attachment of the terminal device 100 to the first display 200A may enable the terminal device 100 to acquire a current white balance value of the first display 200A (hereinafter referred to as a color value, a color temperature, or a white characteristic value).

At this point, the recognition of the color value of the first display 200A refers to the terminal device 100 recognizing a white characteristic of the activated first display 200A.

In addition, the extraction of the color value of the first display 200A refers to storing a value of the white characteristic in a memory of the terminal device 100.

At this point, the recognized and extracted color value of the first display 200A may be displayed in numerical form on the screen 301 of the terminal device 100. For example, in FIG. 1, "192, 168, 0" representing the color value of the first display 200A may be displayed on the screen 301 of a display of the terminal device 100.

Subsequently, the terminal device 100 may be connected through wireless communication to a target display to which a specific color value is to be applied, namely, the second display 200B. In response to the attachment of the rear surface of the terminal device 100 to a surface of the second display 200B, the stored specific color value may be applied as the color value of the second display 200B. That is, only the attachment of the terminal device 100 to the first display 200A may change a current white balance value of the second display 200B to a specific color value stored in the terminal device 100. For example, the color value "192, 168, 0" of the first display 200A, which is stored in the terminal device 100 and displayed on the screen 301, may be applied as a color value of the second display 200B.

At this point, the second display 200B may be positioned to be spaced any distance from the first display 200A. That is, after the terminal device 100 is attached to the first display 200A, the terminal device 100 may move a predetermined distance for a predetermined period of time and may be attached to the second display 200B.

This operation sequence means that an operation performed by the contact of the terminal device 100 to the first display 200A and an operation by the contact of the terminal device 100 to the second display 200B are independently performed. Therefore, as long as a color value extracted from the first display 200A is stored in the terminal device 100, there is no restriction on the point in time at which the terminal device 100 is attached to the second display 200B.

When the terminal device 100 is brought into contact with the second display 200B, the terminal device 100 may recognize and extract a value of a current white characteristic of the second display 200B. At this point, the value of the white characteristic of the extracted second display 200B may be stored in the memory of the terminal device 100 and displayed on the screen 301. Although not illustrated in FIG. 1, in a case where the value of the white characteristic of the second display 200B is displayed on the screen 301, identifiers matching the first display 200A and the second display 200B may be concurrently displayed such that the value of the white characteristic of the second display 200B is displayed in a manner distinguishable from a specific color value (e.g., a value of the white characteristic of the first display 200A) stored in the terminal device 100.

In order to perform the method of automatically adjusting white balance according to the embodiment of the present disclosure, a specific application may be executed on the terminal device 100. In response to the execution of the specific application, the terminal device 100 may be communicatively connected to the first display 200A or the second display 200B, and the camera module may be activated to recognize the value of the white characteristic of the display,

In some embodiments, when a first input is received on the screen 301 of the terminal device 100 after the terminal device 100 is attached to the first display 200A, the value of the white characteristic of the activated first display 200A is recognized and extracted.

At this time, the first input may correspond to a command for copying the value of the white characteristic of the first display 200A. The first input may be, for example, a touch input on a specific region (e.g., a first region) of, or a specific object (e.g., a first object), on the screen 301 of the terminal device 100, but is not limited thereto. As another example, the first input may be replaced by another input technique, such as a preset voice command, a gesture command, or a hard-key push input.

In an embodiment, the first input on the terminal device 100 may involve application of the first input within a predetermined period of time after the terminal device 100 is detached from the first display 200A to which the terminal device 100 had previously been attached.

In addition, in some embodiments, when a second input is applied to the screen 301 of the terminal device 100 after the terminal device 100 is attached to the second display 200B, the value of the white characteristic of the activated second display 200B may be changed to another value of the white characteristic that is stored in the terminal device 100.

At this point, the second input may correspond to a command for pasting a value of a specific white characteristic onto the second display 200B. For example, the second input may be, for example, a touch input on a specific region (e.g., a second region) of, or a specific object (e.g., a second object), on the screen 301 of the terminal device 100, but is not limited thereto. As another example, the second input may be replaced by another input technique, such as a preset voice command, a gesture command, or a hard-key push input, the input technique being different from that used to replace the first input.

The method of automatically adjusting white balance, according to the present disclosure, eliminates the need for the displays, subject to color-value matching, to be simultaneously within the field of view of one camera and the need to directly input a color value of the reference display, for example, specific color coordinates or a specific luminance value. In addition, the simple attachment of the terminal device and the intuitive operation thereof enable the extraction of a color value of a display and/or the application of the color value of another display, thereby enhancing user convenience.

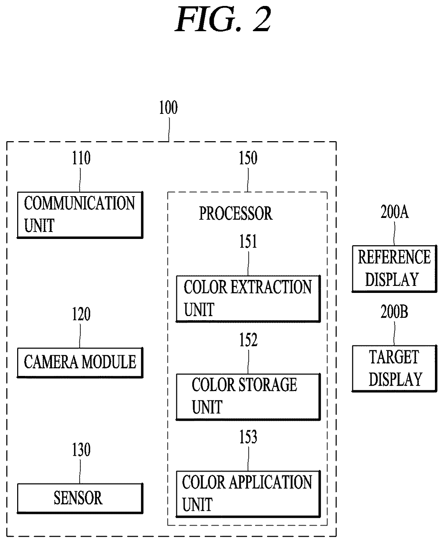

FIG. 2 is a view illustrating an exemplary detailed configuration of the terminal device 100 for automatically adjusting white balance between displays using a camera. As described above, the terms "terminal device 100" and "device for automatically adjusting white balance" have been used interchangeably to refer to the same entity.

With reference to FIG. 2, the terminal device 100 may include a communication unit 110, a camera module 120, a sensor 130, and a processor 150.

The communication unit 110 establishes a communication connection between the terminal device 100 and the first display 200A, namely, a reference display 200A. Specifically, the communication unit 110 enables communication with the reference display 200A located within a predetermined range from the terminal device 100.

Furthermore, the communication unit 110 establishes a communication connection between the terminal device 100 and the second display 200B, namely, a target display 200B. Specifically, the communication unit 110 enables communication with a target display 200B located within a certain range from the terminal device 100.

The communication unit 110 is capable of communicating with the display using wireless Internet communication technologies, such as Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), High Speed Uplink Packet Access (HSUPA), Long Term Evolution (LTE), LTE-advanced (LTE-A), and equivalents thereof.

In addition, the communication unit 110 is capable of performing communication with an external device, for example, the reference display 200A or the target display 200B, using short-range communication technologies, such as Bluetooth^{™}, Radio Frequency Identification RFID, Infrared Data Association (IrDA), Ultra Wideband (UWB), ZigBee, and Near Field Communication (NFC).

The camera module 120 may be included on one side of the rear surface of the terminal device 100. Accordingly, in a case where the terminal device 100 is attached to the reference display 200A or the target display 200B, the camera module 120 arranged on the rear surface thereof may come into contact with the reference display 200A or the target display 200B.

In response to the terminal device 100 being attached to the reference display 200A, the camera module 120 may recognize a color value of the reference display 200A by capturing a screen thereof. In addition, in response to the terminal device 100 being attached to the target display 200B, the camera module 120 may recognize a color value of the target display 200B by capturing a screen thereof.

The camera module 120 may include at least one of the following sensors: a camera sensor (e.g., a CCD, a CMOS), a photo sensor (or an image sensor), or a laser sensor.

The sensor 130 may detect that the terminal device 100 is in contact with a surface of the reference display 200A or the target display 200B. To this end, examples of the sensor 130 include at least one of the following sensors: a proximity sensor, an illumination sensor, a touch sensor, an acceleration sensor, a magnetic sensor, a gravity sensor (G-sensor), a gyroscope sensor, a motion sensor, an RGB sensor, an infrared sensor (IR sensor), an ultrasonic sensor, or an optical sensor.

The processor 150 can detect that the terminal device 100 may be attached to the reference display 200A through the sensor 130 and generate a command for recognizing and extracting the color value of the reference display 200A using the camera module 120.

The processor 150 may operate to recognize and extract the color value of the reference display 200A in response to the reception of the first input.

At this point, examples of the first input may include an input (touch input) applied to the display (or touch screen) of the terminal device 100, a preset-type voice command, a gesture command, and equivalents thereof in a state where the terminal device 100 is in contact with the reference display 200A. At this point, the state of contact with the reference display 200A may involve application of the first input within a predetermined period of time after the terminal device 100 is detached from the reference display 200A to which the terminal device 100 has previously been attached and/or contact with the reference display 200A within a predetermined period of time after the first input is applied.

The processor 150 may operate to display the recognized and extracted color value of the reference display 200A on the display (not illustrated) of the terminal device 100.

The processor 150 may detect, through the sensor 130, that the terminal device 100 is attached to the target display 200B, may recognize the color value of the target display 200B using the camera module 120, and generate a command for calibrating the color value thereof.

The processor 150 may operate to recognize and calibrate the color value of the target display 200B in response to the reception of the second input different from the first input.

At this point, example of the second input may include an input (touch input) applied to the display (or touch screen) of the terminal device 100, a preset-type voice command, a gesture command, and equivalents thereof in a state where the terminal device 100 is in contact with the target display 200B. At this point, the state of contact with the target display 200B may involve application of the second input within a predetermined period of time after the terminal device 100 is detached from the target display 200B to which the terminal device 100 has previously been attached and/or contact with the target display 200B within a predetermined period of time after the second input is applied.

The processor 150 may operate to display the recognized current color value of the target display 200B and the color value to be calibrated on the display (not illustrated) of the terminal device 100. For example, the processor 150 may display, on the display, the extracted color value (hereinafter referred to as 'first color value') of the reference display 200A and the recognized current color value (hereinafter referred to as 'second color value') of the target display 200B in numerical form (e.g., a numerical representation of color gamut) along with respective distinguishing indicators.

The processor 150 may include a color extraction unit 151, a color storage unit 152, and a color application unit 153. With reference to these units, steps of a method of automatically adjusting white balance among a plurality of displays, according to an embodiment of the present disclosure, will be described sequentially.

The color extraction unit 151 enables the activated camera module 120 to recognize a white balance characteristic of the reference display 200A to which the terminal device 100 is attached. In addition, the color extraction unit 151 receives a data value corresponding to the white balance characteristic of the recognized reference display 200A, for example, the first color value, and transfers the received first value to the terminal device 100.

The terminal device 100 may store the received first color value in the color storage unit 152 and display, on a display (not illustrated), a generator for accessing the stored first color value. Subsequently, the terminal device 100 may move a point at which the target display 200B is located, with at least the first color value being stored, and may be communicatively connected to the target display 200B.

Subsequently, the color extraction unit 151 enables the activated camera module 120 to recognize the white balance characteristic of the target display 200B to which the terminal device 100 is attached. Additionally, the color extraction unit 151 receives a data value corresponding to the white balance characteristic of the recognized target display 200B, for example, the second color value, and transmits the second color value to the color storage unit 152.

Simultaneously or sequentially, the color application unit 153 provides a data value of the first color value to the target display 200B through the communication unit 110 such that the second color value of the target display 200B is calibrated to match the pre-stored first color value.

Although not illustrated, the terminal device 100 may further include a display. The display may be implemented in the form of a touch screen that has either a structure in which the touch sensor is interlayered or a structure in which the touch sensor is integrally formed. In addition, the display of the terminal device 100 may be arranged on the front surface thereof such that the display thereof faces the display 200A or the target display 200B when the terminal device 100 is brought into contact therewith. In an embodiment, the extracted color value of the reference display 200A and/or the color value of the target display 200B may be displayed on the display of the terminal device 100 in a distinguished manner.

In addition, in an embodiment, in a case where the terminal device 100 is attached to the reference display 200A, an object (e.g., a first execution icon) for generating a command for extracting the color value of the reference display 200A may be displayed on the display of the terminal device 100. In a similar manner, in a case where the terminal device 100 is attached to the target display 200B, an object (e.g., a second execution icon) for changing the current color value of the target display 200B may be displayed.

In this case, in response to detecting that the terminal device 100 is attached to the reference display 200A, the first execution icon may be generated and displayed on the display. In addition, in response to detecting that at least one first color value is stored in the terminal device 100 and that the terminal device 100 is attached to the target display 200B, the second execution icon may be generated and displayed.

After the terminal device 100 is attached to the reference display 200A., the processor 150 may perform a control operation of extracting the color value of the reference display 200A, based on an input to the first execution icon In addition, after the terminal device 100 is attached to the target display 200B, the processor 150 may perform a control operation of calibrating the color value of the target display 200B to match the stored color value, based on an input to the second execution icon,

In this manner, a device for automatically adjusting white balance, according to an embodiment of the present disclosure, is capable of accurately matching the white balance among a plurality of displays through intuitive operations of attaching the device to a display of which a color value is to be extracted and attaching the terminal device to another display to which the color value is applied. Accordingly, there is no need to perform a calibration step by directly inputting a color value such as luminance, and a plurality of displays do not need to be simultaneously present within a camera's field of view.

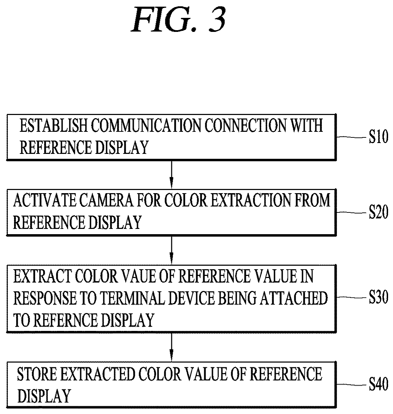

FIG. 3 is a flowchart illustrating steps of performing color extraction on the reference display 200A using the device for automatically white balance, namely, the terminal device 100, according to an embodiment of the present disclosure. In addition, operations that are performed by the device for automatically adjusting white balance, namely, the terminal device 100, which will be described below, may be performed by executing a specific application installed on the terminal device 100.

With reference to FIG. 3, the device for automatically adjusting white balance, namely, the terminal device 100, is communicatively connected to the reference display 200A, namely, the first display 200A (S10).

To this end, an application for performing automatic white balance adjustment, which is pre-installed on the terminal device 100, may be executed, and an operating mode for extracting a color value of the first display 200A may be executed.

In some embodiments, the application for performing automatic white balance adjustment, which is pre-installed on the terminal device 100, may be executed, and, on the executed application, the reference display 200A, namely, the first display 200A, may also be selectively designated.

The terminal device 100 may activate the camera for color extraction from the first display 200A (S20). At this point, the camera may be activated in response to the execution of the above-described application or be performed when the operating mode for extracting the color value of the first display 200A is initiated.

Next, in response to the attachment of the terminal device 100 to the first display 200A, a step of recognizing and extracting the color value of the first display 200A is performed (S30).

Specifically, the sensor 130 of the terminal device 100 detects that one side of the terminal device 100, for example, the rear surface of the terminal device 100, is in contact with a surface of the first display 200A, and transmits a signal corresponding to the detection to the processor 150. In response to the signal corresponding to the detection, the processor 150 controls the camera module 120 to perform an operation of recognizing and extracting the color value of the first display 200A (in FIG. 1). In some embodiments, the recognized and extracted color value of the first display 200A are displayed on the display of the terminal device 100, thereby enabling a user to visually verify the recognized and extracted color value.

In other embodiments, an input may be required to initiate the recognition and extraction of the color value. For example, in response to detecting that the terminal device 100 is in contact with the surface of the first display 200A, an input button for initiating the recognition and extraction of the color value of the first display 200A may be displayed and activated on the screen thereof.

In another embodiment, the terminal device 100 may display, on the display, a first screen for color extraction from the first display 200A. Before or after the terminal device 100 is attached to one region of the first display 200A, in response to a touch input on the first screen, the terminal device 100 may operate to extract the color value of the first display 200A.

Subsequently, the terminal device 100 stores the extracted color value of the first display 200A in such a manner that the extracted color value thereof may be applied to another display (S40).

At this point, the storing of the extracted color in such a manner that the extracted color value may be applied to another display means that the extracted color is stored in a manner enabling prompt access in such a manner that the terminal device 100 calibrates a color value of another display to match the extracted color value.

To this end, the terminal device 100 may generate a graphic object that includes access path information when storing the extracted color value and display the graphic object on the display of the terminal device 100. At this point, in the graphic object, the extracted color value may be displayed in the numeric range of 0 to 255 in compliance with the GGB color representation method.

In an embodiment, in response to the color value of the first display 200A being extracted, the terminal device 100 may display information regarding the extracted color value on a screen of the display thereof.

In this case, the information regarding the extracted color value may remain displayed on the screen of the terminal device 100 even after the terminal device 100 is detached from the first display 200A.

In some embodiments, the graphic object may be displayed along with an identifier for identifying the first display 200A that matches the extracted color value. Accordingly, the user can visually recognize that the color value to be calibrated is aligned with the color gamut of the first display 200A. At this point, the identifier may be displayed in a manner indicating only the source device from which the color value was extracted.

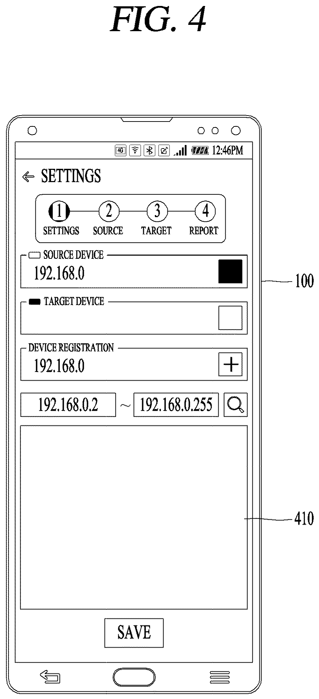

FIGS 4 to 6 are conceptual diagrams that are referenced to describe a sequence of operations performed by the terminal device to perform the color extraction from the reference display 200A, the sequence being illustrated in the flowchart in FIG. 3.

At this point, screens corresponding to the sequence of operations performed by the terminal device 100 may include a "setting screen" and a "source screen." The reference display 200A (and the target display 200B) may be registered through the setting screen of the terminal device 100. In addition, a command for recognizing and extracting the color value of the reference display 200A may be input from the source screen of the terminal device 100.

First, with reference to FIG. 4, when the application for performing automatic white balance adjustment is executed on the terminal device 100, the first display 200A ("source device") from which the color value is extracted may be selected from a setting screen 410 displayed on the terminal device 100, or the terminal device may be communicatively connected to the first display 200A and operate to automatically select the first display 200A from the setting screen 410.

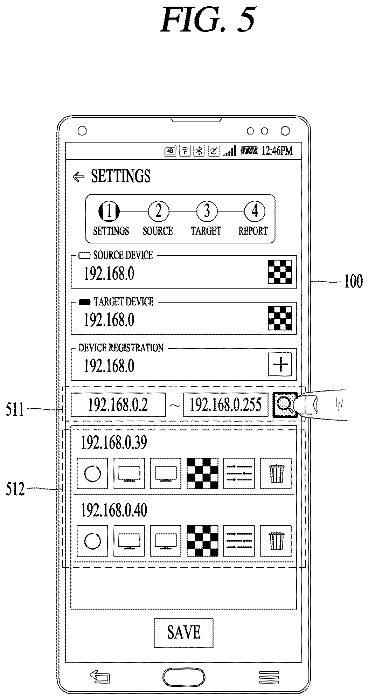

In addition, with reference to FIG. 5, from the settings screen, the second display ("target device") of which the color value is to be calibrated may be selected, or the terminal device may also be communicatively connected to the first display 200A and operate to automatically select the first display 200A. Alternatively, based on an input to a device search item 511 in the settings screen, the first display 200A (source device) of which the color value is to be extracted and/or the second display 200B (target device) may be searched for.

For example, when an input to the device search item 511 is detected, a list 512 of registered or connectable devices, each capable of being communicatively connected to the terminal device 100, may be provided. Either the first display 200A or the second display 200B may be selected from the list 512 of registered or connectable devices. At this point, the selected device may be registered with the terminal device 100 through an activated "save icon."

In this manner, after at least the first display 200A is selected through the setting screen 410 of the terminal device 100, the terminal device 100 is attached to the surface of the first display 200A for color value extraction. Thus, it may be recognized, through the sensor 130 of the terminal device 100, that the terminal device 100 is in contact with the surface of the first display 200A.

In this manner, in response to the terminal device 100 being in contact with the surface of the first display 200A, the camera module 120 of the terminal device 100, for example, a rear camera module, may be activated for color value extraction. Alternatively, as another example, when the application for performing automatic white balance adjustment is executed on the terminal device 100, or when the 'setting screen' or the 'source screen' is displayed on the display of the terminal device 100, the camera module 120 may also be activated.

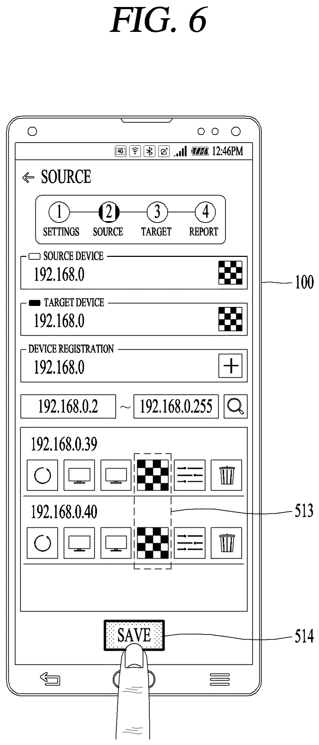

Consequently, with reference to FIG. 6, in response to detecting that the terminal device 100 is attached to the first display 200A, the display screen of the terminal device 100 transitions in depth to the "source" screen. An identifier for identifying the first display 200A may be displayed on the source screen. In addition, the terminal device 100 may generate a control command for recognizing and extracting the color value of the first display 200A based on an input to the source screen.

To this end, an input to a first graphic object 513 on the source screen may be requested such that the control command to recognizing and extracting the color value of the first display 200A is generated. In response to the input to the first graphic object 513, the terminal device 100 may initiate an operation for recognizing and extracting the color value of the first display 200A with which the terminal device 100 is in contact.

Subsequently, the extracted color value may be displayed on the source screen using an RGB color representation method. For example, each of R, G, and B may represent a numerical value ranging from 0 to 255 and may be displayed on the source screen of the terminal device 100. Subsequently, in response to the input to an activated save button 514, the color value of the first display 200A, which is displayed on the source screen, may be stored in the terminal device 100.

In another embodiment, only the attachment of the terminal device 100 to the surface of the first display 200A, without the input to the first graphic object 513 and/or an input to the save button 514, may enable the color value of the first display 200A to be recognized, extracted, and temporarily stored.

In this case, only while being displayed on the screen of the terminal device 100, the color value of the temporarily stored first display 200A may also be applied as a calibration color value of the target display 200B, which will be described in detail below. Accordingly, respective color values of a plurality of displays may be matched by performing only an operation of attaching the terminal device 100 to each device. In addition, to match the color value of one display, respective color values of other displays may be calibrated according to the order in which the terminal device 100 is attached to the displays.

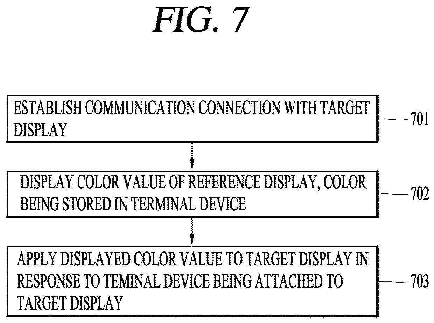

FIG. 7 is a flowchart that is referenced to describe steps of applying the extracted color value to the target display 200B using the device for automatically adjusting white balance, namely, the terminal device 100. In addition, the operations that are performed by the device for automatically adjusting white balance, namely, the terminal device 100, which will be described below, may be performed by executing a specific application installed on the terminal device 100.

With reference to FIG. 7, the device for automatically adjusting white balance, namely, the terminal device 100, is communicatively connected to the target display 200B, namely, the second display 200B (S701).

To this end, the application for performing automatic white balance adjustment, which is pre-installed on the terminal device 100, may be executed, and an operating mode for calibrating a color value of the second display 200B may be executed.

In addition, in an embodiment, in response to the main body of the terminal device 100 approaching within a predetermined distance of the second display 200B of which the color value is to be calibrated, the terminal device 100 may control the communication unit 110 (in FIG. 2) to communicate with the second display 200B.

Alternatively, as described above with reference to FIG. 5, the terminal device 100 may be communicatively connected to the second display 200B of which the color value is to be calibrated, based on either an input to the device search item 511 or a selection input from the list 512 of registered or connectable devices.

The terminal device 100 activates the camera to perform color calibration on the second display 200B. At this point, the camera may be activated either in response to the execution of the above-described application or when the operating mode for calibrating the color value of the second display 200B is initiated. Alternatively, the camera activated in the operating mode for extracting the color value of the first display 200A may continue operating while performing an operation on the second display 200B.

Subsequently, the color value of the reference display 200A, namely, the first display 200A, which is stored in the terminal device 100, is displayed on the screen of the terminal device 100 (S702). Specifically, in the operating mode for calibrating the color value of the second display 200B, the color value (e.g., the color value of the first display 200A) stored in the terminal device 100, the color value being intended for use in calibration, may be displayed on the display of the terminal device 100 in a selectable manner.

Next, in response to the attachment of the terminal device 100 to the second display 200B, a step of recognizing the color value of the second display 200B and calibrating the color value of the second display 200B is performed (S703).

Specifically, the sensor 130 of the terminal device 100 detects that one side of the terminal device 100, for example, the rear surface of the terminal device 100, is in contact with the surface of the second display 100B, and transmits a signal corresponding to the detection to the processor 150. In response to the signal corresponding to the detection, the processor 150 controls the camera module 120 to recognize the color value of the second display 200B (in FIG. 1) and perform an operation of calibrating the recognized color value. In some embodiments, the recognized color value of the second display 200B and the color value (e.g., the color value of the first display 200A) for use in calibration may be displayed on the display of the terminal device 100 in a distinguished manner, thereby enabling the user to visually verify the two color values.

In another embodiment, an input for initiating the recognition and calibration of the color value of the second display 200B may be required. For example, in response to detecting that the terminal device 100 is in contact with the surface of the second display 200B, an input button for initiating the recognition and calibration of the color value of the second display 200B may be displayed on a second screen and activated.

In this case, the terminal device 100 may change a current color value of the second display 200B to the color value of the first display 200A displayed on and stored in the terminal device 100, based on the input to the input button displayed on the second screen. The previous color value of the second display 200B may be displayed in a distinguishable manner, and the changed color value of the second display 200B may be displayed along with an identifier matched with the second display 200B.

In another embodiment, the terminal device 100 may display, on the display, the second screen for performing color calibration on the second display 200B. Before or after the terminal device 100 is attached to one region of the second display 200B, in response to a touch input to the second screen, the terminal device 100 may operate to recognize the color value of the second display 200B and to calibrate the recognized color value to match another color value (e.g., the color value of the first display 200A).

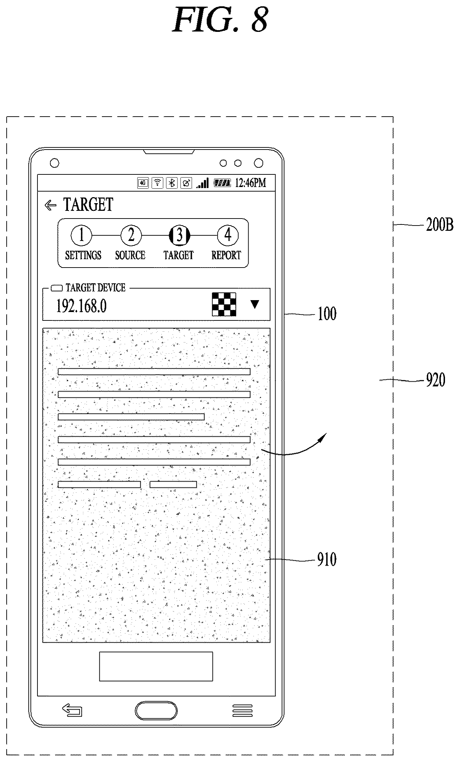

FIGS. 8 to 10 are conceptual diagrams illustrating a sequence of operations performed by the terminal device 100 to automatically adjust the white balance of the target display 200B illustrated in the flowchart in FIG. 7.

At this point, screens corresponding to the sequence of operations performed by the terminal device 100 may include a 'setting screen' and a 'target screen.' The target display 200B (and the reference display 200A) to which the color value is to be applied may be registered through the setting screen of the terminal device 100. In addition, through the target screen of the terminal device 100, the color value of the target display 200B may be recognized and extracted, and a control command for applying another stored color value may be input.

With reference to FIG. 5, the second display 200B ("target device 200B") of which the color value is to be calibrated may be selected from the setting screen, or the terminal device may be communicatively connected to the second display 200B and operate to automatically select the second display 200B from the setting screen. Alternatively, based on the input to the device search item 511, the second display 220B (target device 220B) of which the color value is to be calibrated can be searched through the setting screen.

For example, when an input to the device search item 511 is detected, the list 512 of registered or connectable devices, each capable of being communicatively connected to the terminal device 100, may be provided. The device selected from the list 512 of registered or connectable devices may be selected and registered as the second display 200B.

Subsequently, for color value calibration, the terminal device 100 is attached to the surface of the second display 200B. Then, through the sensor 130 of the terminal device 100, it may be recognized that the terminal device 100 is in contact with the surface of the second display 200B.

In this manner, in response to the terminal device 100 being in contact with the surface of the second display 200B, the camera module 120 of the terminal device 100, for example, the rear camera module, may be activated for color value calibration. Alternatively, as another example, when the application for performing automatic white balance adjustment is executed on the terminal device 100, or when the 'setting screen' or the 'source screen' is displayed on the display of the terminal device 100, the camera module 120 may remain activated.

Subsequently, with reference to FIG. 8, in response to detecting that the terminal device 100 is attached to the second display 200B, the display screen of the terminal device 100 transitions in depth to a "target screen 910." An identifier matched with the second display 200B of which the color value is to be calibrated may be displayed on the target screen 910. In addition, the terminal device 100 may generate a control command for recognizing and calibrating the color value of the second display 200B based on an input to the target screen 910.

When a control command for recognizing and calibrating the color value of the second display 200B is generated based on the input to the target screen 910 is generated, a signal corresponding to the control command is transferred to the second display 200B through the communication unit 110 (in FIG. 2). Accordingly, a screen 920 of the second display 200B switches to the color value of the first display 200A, which is stored in the terminal device 100.

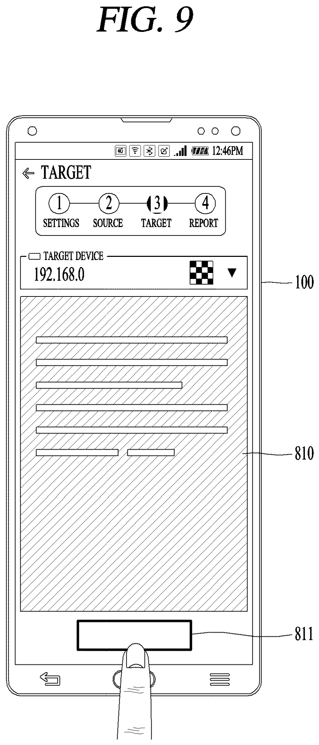

With reference to FIG. 9, an input 810 to a target screen, for example, an input to a second graphic object, may be requested in order to generate a control command for initiating the recognition and extraction of the color value of the second display 200B. In response to the input 810, the terminal device 100 may recognize the color value of the second display 200B with which the terminal device 100 is in contact and may initiate an operation of calibrating the recognized color value to match a different color value (e.g., the color value of the first display 200A) stored in the terminal device 100.

Subsequently, the recognized current color value of the second display 200B may be displayed on the target screen using the RGB color representation method. For example, each of R, G, and B may represent a numerical value ranging from 0 to 255 and may be displayed on the target screen of the terminal device 100. Next, in response to the input to the activated save button 811, the current color value, namely, white balance, of the second display 200B, which is displayed on the target screen, is switched to a color value pre-stored in the terminal device 100, for example, the extracted color value of the first display 200A. Accordingly, the color gamut of the first display 200A and the color gamut of the second display 200B are matched, regardless of respective installation states and locations.

At this point, the recognized previous color value of the second display 200B and the calibrated color value thereof may be stored in a distinguished manner. In this case, the terminal device 100 can display, on the screen of the terminal device 100, a plurality of graphic objects that include a storage path (e.g., a 'first storage path) for the previous color value of the second display 200B, the previous color value being recognized using the activated camera module 120, and a storage path (e.g., a 'second storage path) of the calibrated current color value thereof.

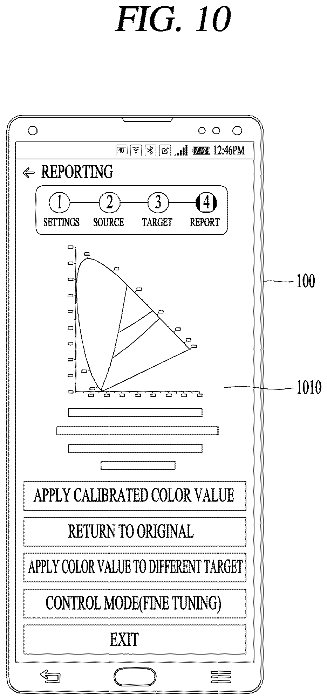

For example, with reference to FIG. 10, when the color value of the second display 200B is calibrated, the display screen of the terminal device 100 may transitions in depth to a "report screen 1010." At this point, a first object matched with an original color value of the second display 200B, which is recognized through the camera module 120, and a second object matched with the calibrated color value may be displayed on the report screen 1010.

At this point, the first storage path and the second storage path may be included in the first object and the second object, respectively. In this case, the terminal device 100 may access the original color value of the second display 200B along the first storage path based on the selection of the first object and may apply the original color value. In addition, the terminal device 100 may access the calibrated color value of the second display 200B along the second storage path based on the selection of the second object.

According to the above-described embodiments, the terminal device equipped with the camera may be directly attached to either the display of which a color gamut is extracted or the display of which a color gamut is to be calibrated. By means of these simple and intuitive operations, the white balance may be matched. Thus, even users unfamiliar with color gamut calibration can use the terminal device equipped with the camera, thereby enhancing usability.

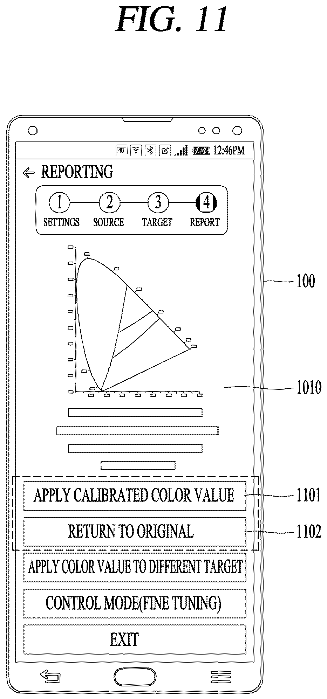

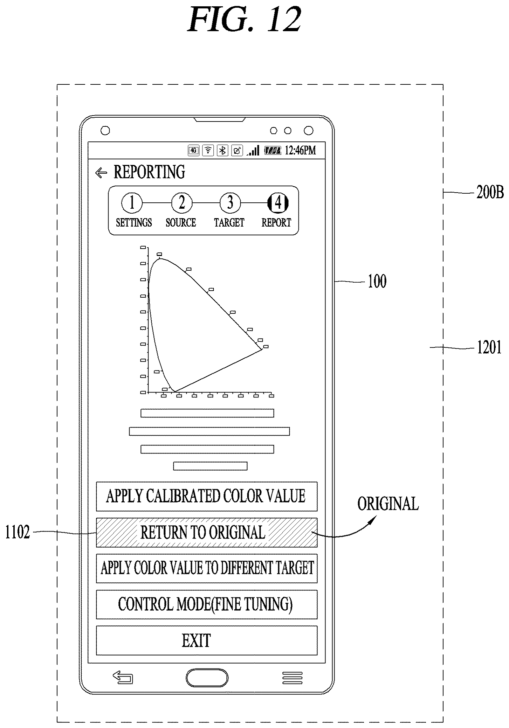

FIGS. 11 and 12 are conceptual diagrams that are referenced to describe a method of restoring the white balance of the target display 200B to the previous state thereof, according to an embodiment of the present disclosure.

The operations that are performed by the device for automatically adjusting white balance, namely, the terminal device 100, which will be described below, may be performed by executing a specific application installed on the terminal device 100. When the terminal device 100 is attached to the second display 200B and the stored color value of the first display 200A is applied, as described above with reference to FIG. 10, the display screen of the terminal device 100 transitions in depth to the "report screen 1010."

At this point, as illustrated in FIG. 11, a first object 1102 for accessing the original color values of the second display 200B, and a second object 1101 for accessing the color value of the first display 200A, which serves as the reference display 200A, may be displayed on the report screen 1010.

In an embodiment, in response to a selection input to the first object 1102, the processor 150 of the terminal device 100 may restore the calibrated color value of the second display 200B to the previous state thereof. To this end, the terminal device 100 may generate the first object 1102 including information about the storage path for the original color value of the second display 200B.

With reference to FIG. 12, a control command for restoring the color gamut of the second display 200B to the original thereof is generated when a touch input is applied to the first object 1102 marked "RETURN TO ORIGINAL" which is included in the report screen 1010, in a state where the terminal device 100 is attached to the second display 200B. The generated control signal corresponding to the control command is transferred to the second display 200B, and a screen 1201 of the second display 200B switches to the original color value.

In addition, in an embodiment, in response to a selection input to the second object 1101, the processor 150 of the terminal device 100 may reset the restored color value of the second display 200B to the color value of the first display 200A. To this end, the terminal device 100 may generate the second object 1101 including information about the storage path for the color value of the first display 200A, the color value being applied to the second display 200B.

Accordingly, even after the color value of the second display 200B is calibrated, through a simple operation, the second display 200B may be promptly restored to the original color value, or have the calibrated color gamut reapplied, thereby enhancing usability.

Although not illustrated, several reference color values may be stored in the terminal device 100. In this case, a respective identifier for each reference display 200A, which is used to identify the matched color value, may also be displayed together with the matched value. In addition, when the terminal device 100 is attached to the target display 200A, selectable color values of the reference display 200B are displayed in a list format along with respective identification information.

In an embodiment, the processor 150 of the terminal device 100 may store a color value of a third display, which differs from the color value of the first display 200A. In this case, the processor 150 may display a list, including the color value of the first display 200A and the color value of the third display, on the screen, for example, the report screen 1010, of the display of the terminal device 100. Subsequently, based on a selection input to the displayed list, the processor 150 may calibrate the color value of the second display 200B to which the terminal device 100 is attached, to match either the color value of the first display 200A or the color value of the third display.

Accordingly, the user can select, from the list, the reference display 200A of which a color gamut is to be matched with the color gamut of the target display 200B to which the terminal device 100 is attached. The color value of the reference display 200A, which is contained in each list, may be edited through additional input. Alternatively, the color values of the reference display may be automatically deleted after a predetermined period of time has passed.

The methods of automatically adjusting white balance, which are described with reference to FIGS. 1 to 12, according to the embodiments of the present disclosure, may be implemented as a computer-readable recording medium on which a program is recorded for performing the methods on a computer.

As described above, in the device for and the method of automatically adjusting white balance, according to the embodiment of the present disclosure, the color gamuts of a plurality of displays can be matched using the movable device equipped with the camera, without directly inputting the color value and regardless of respective installation locations. In addition, the terminal device equipped with the camera can be selectively attached directly to either the display of which the color gamut is to be extracted or the display of which the color gamut is to be calibrated. By means of these simple and intuitive operations, the white balance can be matched. Thus, even users unfamiliar with color gamut calibration can use the terminal device equipped with the camera, thereby enhancing usability. Moreover, the calibrated color value can be restored to the original state thereof, and/or the calibrated color gamut can be reapplied through only a simple input, thereby enhancing user functionality.

The present disclosure can be embodied in the form of computer-readable code on a medium on which a program is recorded. The computer-readable media include all types of recording devices capable of storing data that are readable by a computer system. Furthermore, examples of the computer-readable media include hard disk drives (HDDs), solid-state disks (SSDs), a silicon disk drive (SDD), ROM, RAM, CD-ROMs, magnetic tapes, floppy disks, an optical data storage devices, and similar storage devices. The computer-readable medium may also be realized in the form of a carrier wave (such as for transmission over the Internet). In addition, the computer may also be configured to include or use the processor embedded in a mobile terminal. Therefore, the detailed description above is intended solely for illustrative purposes and should not be construed as limiting the scope of the present disclosure. The scope of the present disclosure should be determined by the proper interpretation of the following claims. All equivalent modifications to the embodiments of the present disclosure fall within the scope of the present disclosure.

The present disclosure also covers the following Examples:

### [Example 1]

A device for automatically adjusting white balance, the device comprising:
a camera included on one side of the main body of the device;
a communication unit communicatively connected to a first display; and
a processor that activates the camera for color extraction from the first display,
wherein, in response to the main body of the device being attached to one region of the first display, the processor extracts a color value of the first display, the color value being recognized using the camera, and stores the extracted color value in such a manner as to be applicable to a second display different from the first display.

### [Example 2]

The device of Example 1, further comprising:
a touch screen that displays a first screen for the color extraction from the first display,
wherein, before or after the main body of the device is attached to the one region of the first display, in response to a touch input to the first screen, the processor operates to extract the color value of the first display.

### [Example 3]

The device of Example 2, wherein, in response to the color value of the first display being extracted, information about the extracted color value is displayed on the first screen.

### [Example 4]

The device of Example 3, wherein the information about the extracted color value is displayed on the first screen even after the main body of the device is detached from the first display, and
wherein the processor operates to apply the extracted color value to the second display while the information about the extracted color value is displayed.

### [Example 5]

The device of Example 1, further comprising:
a memory in which information about the extracted color value is stored,
wherein the processor stores the information about the extracted color value in a manner matched with identification information of the first display.

### [Example 6]

The device of Example 1, further comprising:
a sensor that, after the camera module is activated, detects that the main body of the device is in contact with the surface of one region of the first display, wherein, based on the detection, the processor performs an operation of extracting the color value of the first display.

### [Example 7]

The device of Example 1, wherein, in response to the main body of the device approaching within a reference distance of the second display, the processor controls the communication unit to communicate with the second display, and wherein, in response to the main body of the device being attached to one region of the second display, the processor changes white balance of the second display to match the extracted color value.

### [Example 8]

A terminal device for adjusting white balance, the device comprising:
a camera included on one side of the main body of the terminal device;
a memory in which a color value of a first display is stored;
a communication unit communicatively connected to a second display; and
a processor that activates the camera module to perform color calibration on the second display,
wherein, in response to the main body of the terminal device being attached to one region of the second display, the processor calibrates a color value of the second display, the color value being recognized using the camera, to match the color value stored in the memory.

### [Example 9]

The terminal device of Example 8, further comprising:
a touch screen that displays a second screen which includes the color value of the first display,
wherein, after the main body of the terminal device is attached to one region of the second display, in response to a touch input to the second screen, the processor operates to apply the color value included in the second screen to the second display.

### [Example 10]

The terminal device of Example 9, wherein the processor stores a color value of the second display in the memory, the color value being recognized using the camera, and displays, on the second screen, a first object corresponding to the recognized color value of the second display.

### [Example 11]

The terminal device of Example 10, wherein, in response to a selection input to the first object, the processor restores the calibrated color value of the second display to the previous state thereof.

### [Example 12]

The terminal device of Example 11, wherein the second screen includes a second object corresponding to the stored color value of the first display, and
wherein, after the color value of the second display is restored to the previous state thereof, in response to a selection input to the second object, the processor switches the color value of the second display to the color value of the first display, which corresponds to the second object.

### [Example 13]

The terminal device of Example 9, wherein a color value of a third display different from the first display is stored in the memory, and
wherein the processor displays a list, including the color value of the first display and the color value of the third display, on the second screen of the touch screen.

### [Example 14]

The terminal device of Example 13, wherein the processor calibrates the color of the second display to match either the color value of the first display or the color value of the third display, based on a selection input to the list.

### [Example 15]

A method of automatically adjusting white balance, which is performed in an electronic device, the method comprising: requesting, by the electronic device, a connection for communication with a first display in response to execution of a predetermined application;
requesting activation of a camera module of the electronic device for color extraction from the first display;
extracting a color value of the first display, the color value being recognized using the camera module, in response to the electronic device being attached to one region of the first display; and
storing the extracted color value in such a manner as to be applicable to a second display different from the first display.

### [Example 16]

A method of automatically adjusting white balance, which is performed in an electronic device, the method comprising:
storing a color value of a first display;
requesting, by the electronic device, a connection for communication with a second display different from the first display; requesting activation of a camera module of the electronic device to perform color calibration on the second display; and calibrating a color value of the second display, the color value being recognized using the camera module, to match the stored color value, in response to the electronic device being attached to one region of the second display.

### [Example 17]

A computer-readable medium on which a program for performing the method of any one of Examples 15 to 16 on a computer is recorded.

## Claims

1. A device (100) for automatically adjusting white balance, the device comprising:
a camera (120) included on one side of the main body of the device (100);
a communication unit (110) communicatively connected to a first display (200A); and
a processor (150) that activates the camera (120) for color extraction from the first display (200A), wherein, in response to the main body of the device (100) being attached to one region of the first display (200A), the processor (150) extracts a color value of the first display (200A), the color value being recognized using the camera (120), and stores the extracted color value in such a manner as to be applicable to a second display different from the first display (200A).

2. The device (100) of claim 1, further comprising:
a touch screen that displays a first screen for the color extraction from the first display (200A),
wherein, before or after the main body of the device (100) is attached to the one region of the first display (200A), in response to a touch input to the first screen, the processor (150) operates to extract the color value of the first display (200A).

3. The device (100) of claim 2, wherein, in response to the color value of the first display (200A) being extracted, information about the extracted color value is displayed on the first screen.

4. The device (100) of claim 3, wherein the information about the extracted color value is displayed on the first screen even after the main body of the device is detached from the first display (200A), and
wherein the processor (150) operates to apply the extracted color value to a second display (200B) while the information about the extracted color value is displayed.

5. The device (100) of any one of claims 1 to 4, further comprising:
a memory in which information about the extracted color value is stored,
wherein the processor (150) stores the information about the extracted color value in a manner matched with identification information of the first display.

6. The device (100) of any one of claims 1 to 5, further comprising:
a sensor (130) that, after the camera module is activated, detects that the main body of the device (100) is in contact with the surface of one region of the first display (200A), wherein, based on the detection, the processor (150) performs an operation of extracting the color value of the first display (200A).

7. The device (100) of any one of claims 1 to 6, wherein, in response to the main body of the device (100) approaching within a reference distance of a second display (200B), the processor controls the communication unit (110) to communicate with the second display (200B), and
wherein, in response to the main body of the device (100) being attached to one region of the second display (200B), the processor (150) changes white balance of the second display (200B) to match the extracted color value.

8. A device for adjusting white balance, the device (100) comprising:
a camera (120) included on one side of the main body of the device;
a memory in which a color value of a first display (200A) is stored;
a communication unit (110) communicatively connected to a second display (200B); and
a processor (150) that activates the camera (120) to perform color calibration on the second display (200B), wherein, in response to the main body of the device (100) being attached to one region of the second display (200B), the processor (150) calibrates a color value of the second display (200B), the color value being recognized using the camera (120), to match the color value stored in the memory.

9. The device (100) of claim 8, further comprising:
a touch screen that displays a second screen which includes the color value of the first display (200A),
wherein, after the main body of the device is attached to one region of the second display(200B), in response to a touch input to the second screen, the processor (150) operates to apply the color value included in the second screen to the second display (200B).

10. The device (100) of claim 9, wherein the processor (150) stores a color value of the second display (200B) in the memory, the color value being recognized using the camera (120), and displays, on the second screen, a first object corresponding to the recognized color value of the second display (200B).

11. The device (100) of any one of claims 9 and 10, wherein a color value of a third display different from the first display (200A) is stored in the memory, and
wherein the processor (150) displays a list, including the color value of the first display (200A) and the color value of the third display, on the second screen of the touch screen.

12. The device (100) of claim 11, wherein the processor (150) calibrates the color of the second display (200B) to match either the color value of the first display (200A) or the color value of the third display, based on a selection input to the list.

13. A method of automatically adjusting white balance, which is performed in an electronic device (100), the method comprising:
requesting (S10), by the electronic device (100), a connection for communication with a first display (200A) in response to execution of a predetermined application;
requesting (S20) activation of a camera module (120) of the electronic device for color extraction from the first display;
extracting (S30) a color value of the first display, the color value being recognized using the camera module, in response to the electronic device being attached to one region of the first display; and
storing (S40) the extracted color value in such a manner as to be applicable to a second display (200B) different from the first display (200A).

14. A method of automatically adjusting white balance, which is performed in an electronic device (100), the method comprising:
storing a color value of a first display (200A);
requesting, by the electronic device (100), a connection for communication with a second display (200B) different from the first display(200A);
requesting activation of a camera module (120) of the electronic device (100) to perform color calibration on the second display (200B); and
calibrating a color value of the second display (200B), the color value being recognized using the camera module (120), to match the stored color value, in response to the electronic device (100) being attached to one region of the second display (200B).

15. A computer-readable medium on which a program for performing the method of any one of claims 13 to 14 on a computer is recorded.
